# EUROPEAN PATENT SPECIFICATION

(11) **EP 1 666 557 B1**
(45) Date of publication and mention of the grant of the patent: **16.09.2009**
(21) Application number: 04787988.7
(22) Date of filing: 22.09.2004
(51) Int. Cl.: C09J 153/02, C09J 11/06, A61F 7/08, C08F 297/04, C09J 201/00, A61K 9/00, C09J 153/00

(54) **Heating element including a hot melt adhesive**
Heizelement enthaltend einen Schmelzklebstoff
Elément chauffant incluant un adhésif thermofusible

(30) Priority: 25.09.2003 JP 2003334218
(43) Date of publication of application: 07.06.2006
(73) Proprietor: Ferric Inc., Tokyo 104-0045 (JP)
(72) Inventor: ARAI, Norichika, Chuo-ku, Tokyo 1040045 (JP); MIYASHITA, Eiji, Chuo-ku, Tokyo 1040045 (JP); OHARA, Naoki, 5670841 (JP); TOUHARA, Naoko, 1460083 (JP); WADA, Yoshio, 3501103 (JP)
(74) Representative: HOFFMANN EITLE
(86) International application number: PCT/JP2004/013805
(87) International publication number: WO 2005/030897

(56) References cited:
- EP-A1- 0 345 350
- EP-A1- 0 998 886
- EP-A1- 1 181 911
- WO-A-00/78886
- WO-A-02/45763
- WO-A-98/28016
- WO-A1-00/22061
- JP-A- 1 297 059
- JP-A- 11 019 112
- JP-A- 2001 514 051
- JP-A- 2001 515 091
- JP-A- 2002 512 295
- JP-A- 2003 081 817
- JP-A- 2003 081 817
- JP-A- 2004 115 774
- US-A- 5 322 876
- US-A- 5 342 412
- US-A1- 2002 161 085

## Description

### [TECHNICAL FIELD]

The present invention relates to, a heating element using an adhesive agent for adhering the heating element to the skin. More particularly, the present invention relates to a heating element-use adhesive agent that has both sufficient adhesive strength to adhere well to the skin and excellent nature for protecting the skin, as well as to a heating element for adhering to the skin.

### [BACKGROUND ART]

A hot melt adhesive agent is an adhesive agent including, as a base, a polymer that is solid at a room temperature, and made flowable by heating or melting. The hot melt adhesive agent has the following advantages. Because a solvent or water is not added in the hot melt adhesive agent, it is unlikely to exert toxicity or cause fire. In addition, the hot melt adhesive agent facilitates high-speed productivity. Therefore, the hot melt adhesive agent is used in various fields, such as for disposable body warmers of an "adhesive type" which are to be adhered to the skin or clothes, medical-use warmers, and the like.

Regarding an adhesive agent for a heat patch which is adhered directly to the skin, for example, Patent Document 1 discloses an adhesive agent including an A-B-A type block copolymer as a base polymer, and a heat patch having an adhesive layer of the adhesive agent. Further, Patent Document 2 discloses a hot melt adhesive agent for a heat patch having a specific composition. Patent Document 3 discloses an adhesive heating element comprising a hot-melt adhesive agent.

[Patent Document 1] Japanese Patent Application Publication No. JP-A-1-297059
[Patent Document 2] Japanese Patent Application Publication No. JP-A-11-19112
[Patent Document 3] WO 98/28016 A1

### [DISCLOSURE OF THE INVENTION]

When a heating element is adhered to the skin, it is obviously necessary that the adhesive agent should have enough adhesive strength to prevent the heating element from peeling away and falling off the skin during use. Further, for comfortable use, the adhesive agent is required to have stretchability and/or elasticity performance to allow it to stretch on the skin flexibly along with the movement of the wearer's body. In addition, due to the facts that the adhesive agent is in direct contact with the skin for a relatively long time, that thermal stimulation is applied to the skin while the adhesive agent is in contact with the skin, and that medical-use thermal materials or the like are repeatedly applied to the same area of the skin, even an adhesive agent having low irritation at a normal temperature may cause rubefaction, rash, itching, and the like. Therefore, the adhesive agent is required to have especially low skin irritation and to be extremely safe. The adhesive agent for adhering a heating element to the skin, therefore, is required to have a high level of safety as well as adhesive characteristics such as adhesive strength at an elevated temperature.

In view of the foregoing, it is an object of the present invention to provide an adhesive heating element comprising a heating member having a hot melt adhesive agent that has those characteristics required to adhere a heating element to the skin in good balances. More particularly, it is an object of the present invention to provide a heating element comprising an adhesive agent that has sufficient adhesive strength to adhere the heating element to the skin, and has a highly protective nature for the skin to ensure higher safety, as well as to provide a heating element using such an adhesive agent.

The adhesive agent used in the heating element according to the present invention is a hot melt adhesive agent for adhering a heating element, which includes a base polymer, a tackifier, a softener, and a surfactant. The adhesive agent is **characterized in that** the content of the surfactant is 5 to 25 parts by weight relative to 100 parts by weight of the all components other than the surfactant.
The base polymer preferably contains a thermoplastic block copolymer, such as a styrene-isoprene-styrene block copolymer (SIS) or the like.
The content of the surfactant is preferably 10 to 20 parts by weight, and more preferably 12 to 18 parts by weight, relative to 100 parts by weight of the all components other than the surfactant.
The proportion of essential components of the adhesive agent other than the surfactant is 40 to 160 parts by weight of the tackifier, and 80 to 230 parts by weight of the softener, relative to 100 parts by weight of the base polymer.
The surfactant preferably includes at least one of polyoxyethylene alkyl ether, polyoxyethylene polyoxypropylene glycol, and polyoxyethylene hardened castor oil.

The adhesive heating element according to the present invention includes a heating member that has an adhesive layer of the adhesive agent of the present invention formed on a skin-contacting surface.
The adhesive layer is normally covered with a release member.
The heating member preferably contains a heat-generating composition that generates heat in the presence of air, and that is provided in a bag having at least one side made of an air-permeable sheet material.
The heating element according to the present invention is normally contained in an outer bag made of an airtight sheet material.

In the present invention, a "heating element" is means for applying heat to a human body irrespective of its purpose(s). Such purposes include warming the body, obtaining a medical or cosmetic effect, and the like. The heating element includes a heating member as a constituent element. The heating element may include a component or components effective for medical or cosmetic purposes or the like, in addition to a constituent(s) for warming the body. Specific examples include a disposable body warmer, a medical-use warmer, a heat patch including medicament, and the like. However, the heating element of the present invention is not limited to these examples.

In the present invention, a "heating element-use adhesive agent" or "adhesive agent for (adhering) a heating element" is an adhesive agent that is used to adhere a heating element to the skin.

Conventionally, a surfactant is mixed in a hot melt adhesive agent in order to evenly mix a hydrophilic additive or the like into the hot melt adhesive agent. The mixing amount of the surfactant is a few percent or less.

According to the present invention, a hot melt adhesive agent including a hydrophobic polymer as a base is formulated to contain a high concentration of surfactant to make the adhesive agent hydrophilic. As a result, the hot melt adhesive agent can more effectively hold the adhered object, regardless of whether the object is being adhered to the surface of oil-rich skin or the surface of moisture-rich skin. Accordingly, the adhesive agent can easily be adhered evenly to the skin even if the adhesive agent has a lower adhesive strength than that of a conventional agent. In addition, the adhesive agent can easily be removed from the skin without stimutations such as peeling away the stratum corneum of the skin, tugging the skin surface and the like. Thus, according to the present invention, as a result of formulating the hot melt adhesive agent to contain a high concentration of surfactant, peeling of the stratum corneum of the skin is noticeably reduced after a wearer has removed an adhesive heating element, and the high-concentration surfactant effectively protects the skin.

According to the present invention, an adhesive agent is provided that is particularly suitable for adhering a heating element to a human body. The adhesive agent balances characteristics such as: an appropriate adhesive strength to prevent the heating element from peeling away and falling off the skin during use (i.e., when heat is generated); an appropriate stretchability and/or elasticity performance that enables the heating element to fit on the skin along with the movement of a wearer's body; and a very high level of safety for the skin causing only a small amount of peeling of the stratum corneum. Further, a safe and highly effective heating element is provided that reduces the generation of rubefaction, rash and itching of the skin, and damage of the stratum corneum caused by the adhesive agent.

### [BEST MODES FOR CARRYING OUT THE INVENTION]

### 1. Adhesive Agent

### Base Polymer

A base polymer of an adhesive agent used in a heating element according to the present invention may be a thermoplastic block copolymer like, for example, a block copolymer such as an A-B-A type block copolymer or the like. In the A-B-A type block copolymers, block "A" is an inelastic copolymer block of a monovinyl-substituted aromatic compound such as styrene, methyl styrene or the like, whereas block "B" is an elastic copolymer block of a conjugated diene compound such as butadiene, isoprene or the like. Specific examples include, for example, styrene-isoprene-styrene block copolymers (SIS), styrene-butadiene-styrene block copolymers (SBS), and hydrogenated copolymers thereof such as polystyrene-polyethylene-polybutylene-polystyrene copolymers (SEBS) and polystyrene-polyethylene-polypropylene-polystyrene copolymers (SEPS), and the like. These base polymers may be used alone or in a combination of two or more.

Of these base polymers, SIS is preferable in terms of tackiness, safety and viscosity characteristics.

Examples of commercially produced A-B-A type block copolymers include, JSR SIS-5200, JSR SIS-5505 (made by JSR); Califlex TR-1101, Califlex TR-1107, Califlex TR-1111 (made by Shell Chemicals); Solprene 418 (made by Phillips Petroleum Company); Kraton G (made by Shell Chemicals); Septon (made by Kuraray Co., Ltd.).

### Tackifier

The tackifier used in the adhesive agent used in the heating element according to the present invention may be one that is generally used by those skilled in the art. Examples include alicyclic petroleum resins and their hydrogenated derivatives. More specifically, alicyclic saturated hydrocarbon resins, rosins, modified rosins, glycerin esters of dehydrogenated rosins, glycerin esters of gum rosins, hydrogenated rosins, methyl esters of hydrogenated rosins, glycerin esters of hydrogenated rosins, pentaerythritol esters of hydrogenated rosins, polymerized rosins, glycerin esters of polymerized rosins, cumarone-indene resins, hydrogenated petroleum resins, maleic anhydride modified rosins, rosin derivatives or C₅ petroleum resins, or the like may be used. The tackifier may be used alone or in a combination of two or more if necessary.

Of these tackifiers, alicyclic saturated hydrocarbon resins are preferable in terms of thermal stability, compatibility, safety, and hue. Glycerin esters of hydrogenated rosins are preferable when perspiration resistance is also required.

Examples of commercial products used as tackifiers include Ester Gum H, KE-311, Arkon P-85, Arkon P-100, Arkon P-125 (made by Arakawa Chemical Industries, Ltd.), Quintone (made by Zeon Corporation), Escorez 3000 (made by Exxon), and the like.

The content of the tackifier in the adhesive agent is 40 to 160 parts by weight, preferably 50 to 140 parts by weight, and most preferably 70 to 120 parts by weight, of the tackifier relative to 100 parts by weight of the base polymer.

### Softener

The softener used in the adhesive agent used in the heating element according to the present invention may be one that dissolves or disperses the base polymer to promote softening, and that is generally used by those skilled in the art. Generally, higher fatty acid, liquefied rubber, mineral oil, and the like are used, alone or in combination.

More specifically, examples includes coconut oil, castor oil, olive oil, camellia oil, almond oil, persic oil, peanut oil, sesame oil, soybean oil, mink oil, cottonseed oil, corn oil, safflower oil, oleic acid, liquid paraffin, polybutene, and the like.

The content of the softner in the adhesive agent is 80 to 230 parts by weight, preferably 100 to 210 parts by weight, and most preferably 140 to 200 parts by weight, relative to 100 parts by weight of the base polymer.

### Surfactant

In the adhesive agent used in the heating element according to the present invention, a surfactant is used as an essential component. In the art of adhesives, the following surfactants have been conventionally used to facilitate dispersibility of insoluble components in an adhesive agent: anionic surfactants, cationic surfactants, nonionic surfactants and amphoteric surfactants. Any one of the aforementioned surfactants may be used as the surfactant in the adhesive agent according to the present invention. More specifically, the following surfactants can be given as examples: higher fatty acid salts such as sodium laurate, sodium oleate, and the like; salts of higher alcohol sulfuric acid esters or higher alkyl ether esters such as sodium lauryl or stearyl sulfate esters, and the like; salts of sulfonate such as sodium dodecylbenzenesulfonate, sodium alpha-olefin sulfonate, and the like; polyoxyethylene lauryl ether, coconut oil fatty acid sorbitan, polyoxyethylene sorbitan monostearate, and the like.

For the adhesive agent used in the heating element according to the present invention, nonionic surfactants are preferable. Particularly, a nonionic surfactant having thermal stability is more preferable. In the present invention, "having thermal stability" means that decomposition, discoloration or the like does not occur at a temperature normally required for the producing and coating processes of a hot melt adhesive agent. More specifically, "having thermal stability" means that decomposition or the like does not occur at temperatures of about 170 C°.

For a cosmetic or medical use-product, the following surfactants are more preferable in terms of safety. Specific examples of preferable surfactants include polyoxyethylene alkyl ether, polyoxyethylene polyoxypropylene glycol, polyoxyethylene hardened castor oil, and the like.

The content of the surfactant in the adhesive agent is 5 to 25 parts by weight, preferably 10 to 20 parts by weight, and most preferably 12 to 18 parts by weight, relative to 100 parts by weight of the all components other than the surfactant.

### Other Components

The adhesive agent used in the heating element of the present invention may contain other components, if necessary. For example, another adhesive agent, an antioxidant, a bulking agent, an adhesion control agent, an adhesion improver, a coloring agent, an antifoaming agent, a thickener, a modifier, a fungicide, an antibacterial agent, a disinfectant, a deodorant or a deodorizer, and the like can be appropriately included in appropriate amounts. The type and content of substances specifically used for these components can be selected and adjusted by those skilled in the art at their discretion.

The adhesive agent used in the heating element according to the present invention may contain a water-absorbing polymer. By including a water-absorbing polymer, the adhesive agent becomes capable of absorbing sweat and the like generated as a result of heat application. It is therefore desirable, because keeping the skin clean and preventing a decrease in adhesive strength due to the presence of water can be possible. Such a water-absorbing polymer is known by those skilled in the art. In the adhesive agent according to the present invention, a water-absorbing polymer capable of absorbing a volume of water that is 10 times or more, preferably 50 times or more, of its own weight is preferable. A water-absorbing polymer in which crosslinking is introduced is more preferable.

Further, the adhesive agent used in the heating element according to the present invention may contain a medicament that can be absorbed percutaneously. More specifically, examples include epispastics, analgesic anti-inflammatory agents, drugs affecting the central nervous system (hypnotics and sedatives, antiepileptic drugs, psychoneurologic drugs, uragogues, antihypertensives, coronary vasodilators, antitussives and expectorant drugs, antihistamines, antiarrhythmics, cardiotonic drugs, an adreno cortical hormones, local anesthetics, and the like. These medicaments can be used alone or in a combination of two or more as necessary.

The content of these medicaments is not particularly limited as long as a medical effect can be expected and the characteristics of the adhesive agent of the present invention are not impaired. In view of pharmacologic effect(s), economic efficiency, adhesive strength and the like, generally, the content is appropriately determined in the range of 0.01 to 25 parts by weight, especially 0.5 to 15 parts by weight, of the percutaneously-absorbable medicament, relative to 100 parts by weight of the adhesive agent.

### Production of Adhesive Agent

The adhesive agent used in the heating element of the present invention can be produced according to a production method similar to that of a common hot melt adhesive agent. Specifically, first, each raw material component is measured, and all raw materials other than the tackifier are placed in a melting tank. This mixture is agitated and mixed in the tank at a temperature between 60 and 250 C°, generally between 150 and 170 C°, until it becomes homogeneous, while the tank is filled with nitrogen. Next, the tackifier is added to the mixture, and the mixture is agitated in a similar manner until the tackifier melts and the mixture becomes homogeneous. When the mixture has become homogeneous liquid, agitation is stopped and the mixture is deaerated in vacuo.

The adhesive agent obtained in the above manner is melted at an appropriate temperature, and coated on a release material, such as release-coated paper, film, sheet or the like so as to form an adhesive layer.

Further, when a percutaneously-absorbable medicament is contained in the adhesive agent, the medicament does not need to be contained from the beginning. For example, a solution in which the percutaneously-absorbable medicament is dissolved may be sprayed on or applied to the surface of the adhesive layer obtained by coating in the above manner, and then dried.

The adhesive agent used in the heating element according to the present invention may be crosslinked so as to improve the thermal stability, adhesive strength and shape-retaining performance when heat is applied, and retaining performance of the medicaments. The crosslinking process is known to those skilled in the art. Further, the adhesive agent of the present invention may be used by foaming it with a known method for the purpose of obtaining cushioning characteristics or the like.

The thickness of the adhesive agent layer is not particularly limited. However, the thickness is normally 10 to 3000 µm, preferably 50 to 2000 µm, more preferably 50 to 1000 µm, and most preferably 50 to 500 µm. When the thickness is less than 10 µm, adhesive strength may be insufficient. On the other hand, when it exceeds 3000 µm, the wearer's feeling and economic efficiency deteriorate.

### 2. Heating element

A heating element according to the present invention has an adhesive layer composed of the adhesive agent of the present invention, on a skin-contacting surface of a heating member. The adhesive layer is normally covered with a release material.
The heating member is not particularly limited as long as it can apply heat to a human body. Generally, a bag or sheet containing a chemical composition that generates heat when in contact with air or oxygen, a plate that electrically generates heat, or the like can be used. In view of usage convenience and the like, the heating member preferably contains, in a bag having at least one side made of a air-permeable sheet material, a heat-generating composition that generates heat in the presence of air. Such heating members and heating elements are widely known.
The heating element as described above is normally sealed and contained, in units of one or two, in an outer bag made of an air-tight sheet material.

### Production of Heating element

The production method for producing a heating element is known. Various methods may be used for forming an adhesive layer on a heating element. For example, a sheet having an adhesive layer made of the adhesive agent according to the present invention may be obtained by applying the adhesive agent to a release material as described above and then transferring it onto the sheet. The sheet can then be used as one of the sides of the bag for containing a heat-generating composition that generates heat when in contact with air to obtain a heating member.
Alternatively, the adhesive layer may be formed by directly applying the adhesive agent to a heating member.

### [Examples]

### Production of Adhesive Agent (Examples 1 to 5, Comparative Examples 1 to 3)

SIS (SIS-5505P; JSR) as a base polymer, a hydrogenated petroleum resin as a tackifier (Arkon P-100; Arakawa Chemical Industries, Ltd.), liquid paraffin (Morescowhite P-350 P; Matsumura Oil Research Corp.) and Polybutene (HV-300; Nippon Petrochemicals Co., Ltd.) as a softener, polyoxyethylene polyoxypropylene glycol (Pluronic F-68; Asahi Denka Co., Ltd.) or polyoxyethylene hardened castor oil (EMALEX HC-100; Nihon Emulsion Co., Ltd.) as a surfactant, and antioxidant (IRGANOX 1010; CIBA) are used. The adhesive agents, which contained these components in accordance with the composition shown in Table 1 and Table 2, were produced in the following manner.

**[TABLE 1]**

| BASIC COMPOSITION OF ADHESIVE AGENT | | |
|---|---|---|
| COMPONENT | | AMOUNT (WEIGHT %) |
| BASE POLYMER | SIS-5505P | 27.2 |
| TACKIFIER | HYDROGENATED PETROLEUM RESIN ARCON P-100 | 23.0 |
| SOFTENER | LIQUID PARAFFIN MORESCOWHITE P-350 P | 38.4 |
| | POLYBUTENE HV-300 | 10.9 |
| ANTIOXIDANT | IRGANOX | 0.5 |

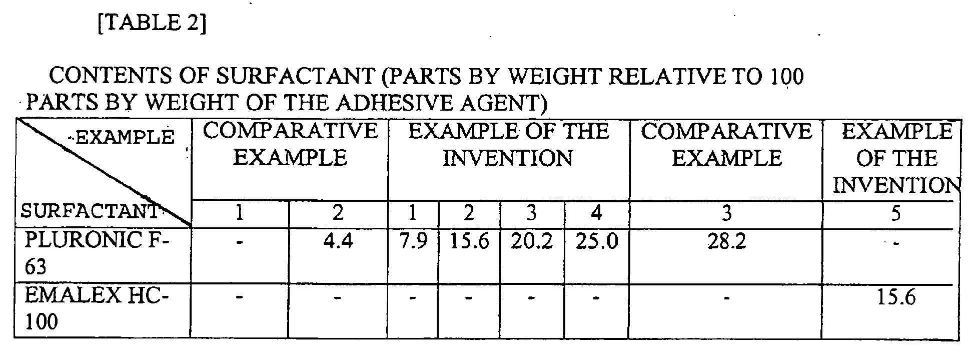

First, each raw material component was weighed, and all the raw materials other than the tackifier were placed in a melting tank. The melting tank was set to a temperature of 155 C°. With the tank being filled with nitrogen, this mixture was agitated and mixed until it became homogeneous. Next, the tackifier was added to the mixture, and the mixture was agitated in a similar manner until the tackifier dissolved and the mixture became homogeneous. Then, when the mixture became homogeneous liquid, agitation was stopped and the mixture was deaerated in vacuo.

### Coating of Adhesive Agent

Each produced adhesive agent was melted at a temperature of 160 C°. Using an applicator that was heated to a temperature of 160 C°, the melted adhesive agent was applied to a release-coated glassine paper, with a thickness of 80 µm, so as to produce an adhesive sheet. Thereafter, the adhesive sheet was transferred to a corona-processed low-density polyethylene (LLDPE) film with a thickness of 60 µm.

### Production of Heating element

The heating member, which used a heat-generating composition that generates heat in the presence of air, was produced in the following manner.
As the permeable sheet material that constitutes one side (a front side) of the bag that houses the heat-generating composition, a sheet (air-permeability of 15,000 to 20, 000 sec/100 cc; measured in accordance with JIS P-8117) made by laminating a nylon non-woven fabric on a porous permeable film made of polyethylene was used.

On the other hand, as the sheet material that constitutes the back side of the bag housing the heat-generating composition, each adhesive-coated film produced in the above manner was used.

The above-described sheets of the front side and the back side were cut out in a rectangular shape of 9.5 cm x 13.0 cm. The sheets were layered so that the permeable base film of the front sheet and the polyethylene film of the back sheet were in contact with each other. Then, three of the periphery sides of the sheets were heat-sealed to form a flat bag with one side left open.

30 grams of heat-generating composition was filled into the flat bag from the opening, and the opening was heat-sealed. The heat-generating composition was composed of 60 weight percent of iron powder, 3 weight percent of activated carbon, 3 weight percent of sodium chloride, 3 weight percent of water retaining agent, and 31 weight percent of water, with respect to the total weight of the heat-generating composition. Thus, heating elements for adhering to the skin were produced, which had a heating member containing a heat-generating composition that generates heat in the presence of air. In each heating elements, one side (the front side) of the heating member was formed by the permeable sheet, and the other side (the back side) by the sheet having the adhesive layer.

Each of these heating elements, with the adhesive layer covered with a release material, were sealed in an outer bag made of polyvinylidene chloride-coated polypropylene film (KOP) / polyethylene (PE) having oxygen barrier properties and then the heating elements were kept at normal temperature until used.

### Experimental Examples

### 1. Test of Effect of Adhesive Agent on Skin Surface

80 g/m² of each produced adhesive agent was applied to an LLDPE film with a thickness of 60 µm. Pieces of the film (3 cm x 5 cm) were adhered to the skin of an adult man, at the inner side of the upper arm, the abdomen and the back. After one hour, each film piece was removed, and eosin stain solution was applied to the surface of the adhesive agent. After the film pieces were left for 2 minutes, each film piece was washed with water, and its coloration was observed by the naked eye and evaluated.

Eosin is a pigment that dyes cells red. Although an adhesive agent is dyed evenly and faintly by eosin, deep-dyed spots that are clearly distinguishable from the background dyeing are observed when skin cells adheres to the adhesive agent (in other words, when the stratum corneum of the skin is peeled away by the adhesive agent). These deep-dyed spots were marked in accordance with the following criteria: no spots (-); virtually no spots (+ / -); a few spots in some parts (+); a moderate number of spots (+ +); and spots across almost the whole area (+ + +).

### 2. Adhesive Strength Test

A measurement piece of 20 mm x 150 mm was cut out from each of the adhesive sheets produced in the above examples. Then, each measurement piece was adhered to a plain stainless plate by rolling a 2 kg of roller forward and backward over the measurement piece. After the measurement piece was left for 30 minutes at a temperature of 23 C°, a peeling strength of 180° with a peeling speed of 300 mm/minute was measured in an atmosphere of 23 C°.

Table 3 shows the results. The cell-dyeing test did not show a significant difference as to the area to which the test pieces were adhered. Therefore, Table 3 only shows the results in the case where the test pieces were adhered to the abdomen.

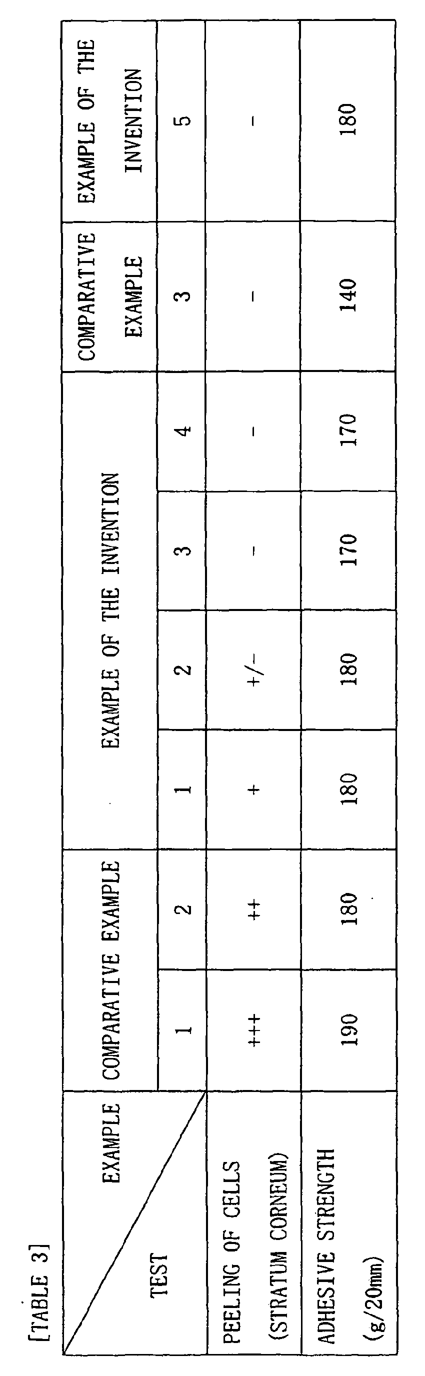

Regarding the effect on the stratum corneum, all of examples 1 to 5 were superior to comparative example 1 containing no surfactant and comparative example 2 containing 4.4 parts by weight of the surfactant. Further, as the concentration of the surfactant was increased, peeling of the stratum corneum was reduced. Thus, in terms of skin protection, it was determined that a desirable concentration of the surfactant was equal to or more than 5 parts by weight.

On the other hand, it was observed that the adhesive strength tended to be reduced as the concentration of the surfactant was increased. In comparative example 3, in which the content of the surfactant is 28 parts by weight, the adhesive strength was reduced remarkably.
Accordingly, based on these test results, it was determined that the range of desirable content of the surfactant was 5 to 25 parts by weight.

### 3. Heating element Performance Test

The performance of each heating element of examples 1 to 5, and comparative examples 1 to 3 was evaluated by adhering respective heating elements to adult male subjects.
One of the heating elements of examples 1 to 5 and one of the heating elements of comparative examples 1 to 3 (total 2) were adhered to each side of the backbone in the lumbar part of each subject. Then, each subject put on a T-shirt over the heating element, and the subject was made to do normal light work for 6 hours. The next day, a new heating element of the same type was adhered to the same portion, and the subject was made to do similar work. This experiment was repeated for 5 consecutive days. After completion of the experiment on the fifth day, each subject was asked to report about how the heating elements felt during and after use. This wearer feeling was evaluated in accordance with the following criteria: in terms of "adhesive stability during use", very good (⊙), good (○), a little unstable (Δ), unstable or fall-off during use (X); and in terms of "stickiness after removal", strong (+ +), a little (+), hardly felt (+ / -), none (-). The condition of the skin of every subject after removal of the heating elements was objectively evaluated using the naked eye by two evaluators other than the subjects, after the completion of the experiment on the first, third and fifth days.

The temperature between the heating element and the skin area to which the heating element was adhered was stable in a range of 39.5 to 41.2 C° in all of the experiments. Accordingly, no significant difference among adhesive agents was observed. These experimental results are summarized in Table 4.

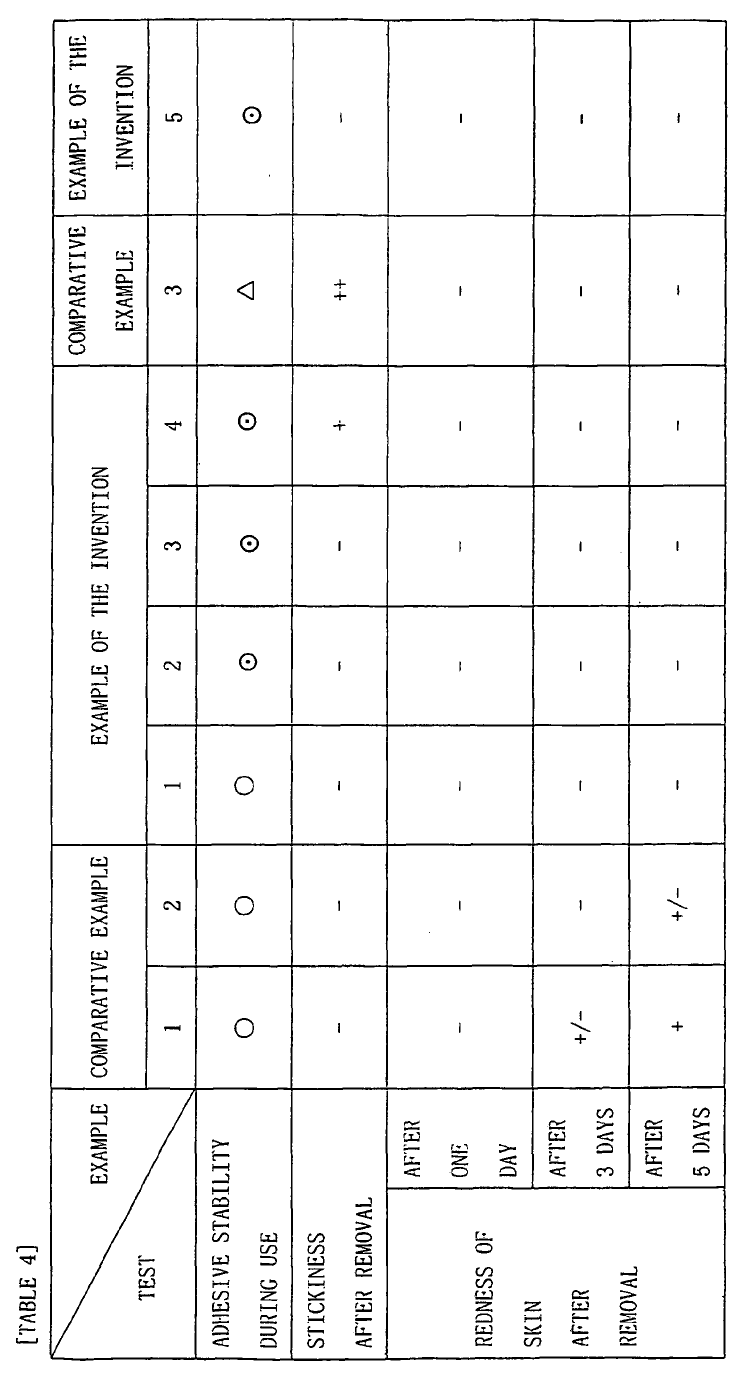

The results shown in Table 4, similar to the experimental results shown in Table 2, demonstrate that the adhesive characteristics to the skin and the skin condition after removal of the heating elements are good when the concentration rage of the surfactant is set according to the present invention.

On the basis of the above results, it has been found that, according to the present invention, an adhesive agent can be obtained that is particularly suitable for adhering a heating element to a human body. The adhesive agent balances characteristics such as: having appropriate adhesive strength to prevent the heating element from peeling away and falling off the skin during use (i.e., when heat is generated); having appropriate stretchability and/or elasticity performance that enables the heating element to stretch on the skin along with the wearer's body movement; causing only a small amount of peeling of the stratum corneum; and having a particularly high level of safety for the skin. Further, a safe and highly effective heating element is provided that reduces the generation of rubefaction, rash and itching of the skin, and damage of the stratum corneum caused by the adhesive agent.
It has been found that, according to the present invention, as a result of formulating the hot melt adhesive agent to contain a high concentration of surfactant, peeling of the stratum corneum of the skin is noticeably reduced after a wearer has removed the adhesive heating element, and that the high concentration of surfactant effectively protects the skin.
The present application is based on Japanese Patent No. 2003-334218 filed on September 29, 2003.

## Claims

1. An adhesive heating element which comprises a heating member having an adhesive layer formed on a skin-contacting surface comprising a hot melt adhesive agent which comprises a base polymer, a tackifier, a softener, and a surfactant as essential components, the adhesive agent being **characterized in that** the content of the surfactant is 5 to 25 parts by weight relative to 100 parts by weight of all components other than the surfactant.

2. The adhesive heating element according to claim 1, wherein the adhesive agent contains a thermoplastic block copolymer as the base polymer.

3. The adhesive heating element according to claim 2, wherein the adhesive agent contains a styrene-isoprene-styrene block copolymer (SIS) as the base polymer.

4. The adhesive heating element according to any one of claims 1 to 3, wherein the content of the surfactant is 10 to 20 parts by weight relative to 100 parts by weight of all components of the adhesive agent other than the surfactant.

5. The adhesive heating element according to any one of claims 1 to 4, wherein the proportion of the essential components of the adhesive agent other than the surfactant is 40 to 160 parts by weight of the tackifier and 80 to 230 parts by weight of the softener, relative to 100 parts by weight of the base polymer.

6. The adhesive heating element according to any one of claims 1 to 5, wherein the adhesive agent contains, as the surfactant, at least one of polyoxyethylene alkyl ethers, polyoxyethylene polyoxypropylene glycols, and polyoxyethylene hardened castor oils.

7. The adhesive heating element according to any preceding claim, wherein the adhesive layer is covered with a release material.

8. The adhesive heating element according to any preceding claim, wherein the heating member contains a heat-generating composition that generates heat in the presence of air, the heat-generating composition being provided in a bag having at least one side made of a permeable sheet material.

9. The adhesive heating element according to any preceding claim, wherein the heating element is housed in an outer bag made of an airtight sheet material.

## Patentansprüche

1. Adhäsives Heizelement, das eine Heizeinheit mit einer auf einer Hautkontaktfläche gebildeten Klebstoffschicht umfasst, die ein wärmeschmelzendes Klebemittel umfasst, das als wesentliche Komponenten ein Basispolymer, einen Klebrigmacher, einen Weichmacher und ein Tensid umfasst, wobei das Klebemittel **dadurch gekennzeichnet ist, dass** der Gehalt an Tensid 5 bis 25 Gew.-Teile in Bezug auf 100 Gew.-Teile aller Komponenten außer dem Tensid ist.

2. Adhäsives Heizelement gemäß Anspruch 1, worin das Klebemittel ein thermoplastisches Blockcopolymer als Basispolymer enthält.

3. Adhäsives Heizelement gemäß Anspruch 2, worin das Klebemittel ein Styrol-Isopren-Styrol-Blockcopolymer (SIS) als Basispolymer enthält.

4. Adhäsives Heizelement gemäß mindestens einem der Ansprüche 1 bis 3, worin der Gehalt an Tensid 10 bis 20 Gew.-Teile in Bezug auf 100 Gew.-Teile aller Komponenten des Klebemittel außer dem Tensid ist.

5. Adhäsives Heizelement gemäß mindestens einem der Ansprüche 1 bis 4, worin der Anteil der wesentlichen Komponenten des Klebemittels außer dem Tensid 40 bis 160 Gew.-Teile des Klebrigmachers und 80 bis 230 Gew.-Teile des Weichmachers in Bezug auf 100 Gew.-Teile des Basispolymers ist.

6. Adhäsives Heizelement gemäß mindestens einem der Ansprüche 1 bis 5, worin das Klebemittel als Tensid mindestens eines aus Polyoxyethylenalkylethern, Polyoxyethylenpolyoxypropylenglycolen und polyoxyethylenierten gehärteten Rizinusölen enthält.

7. Adhäsives Heizelement gemäß mindestens einem vorhergehenden Anspruch, worin die Klebstoffschicht mit einem Freisetzungsmaterial bedeckt ist.

8. Adhäsives Heizelement gemäß mindestens einem vorhergehenden Anspruch, worin die Heizeinheit eine wärmeerzeugende Zusammensetzung umfasst, die in Gegenwart von Luft Wärme erzeugt, wobei die wärmeerzeugende Zusammensetzung in einer Tasche bereitgestellt wird, die mindestens eine Seite aus einem durchlässigen Folienmaterial besitzt.

9. Adhäsives Heizelement gemäß mindestens einem vorhergehenden Anspruch, worin die Heizeinheit in einer äußeren Tasche aus einem luftdichten Folienmaterial eingeschlossen ist.

## Revendications

1. Elément chauffant adhésif formé sur une surface qui est en contact avec la peau, l'élément comprend un organe chauffant ayant une couche adhésive qui contient un agent adhésif thermofusible qui comprend un polymère de base, un agent poisseux, un adoucissant, et un tensioactif comme composants essentiels, l'agent adhésif étant **caractérisé en ce que** la teneur en tensioactif est de 5 à 25 parties en poids par rapport à 100 parties en poids de tous les composants autres que le tensioactif.

2. Elément chauffant adhésif selon la revendication 1, dans lequel l'agent adhésif contient un copolymère séquencé thermoplastique comme polymère de base.

3. Elément chauffant adhésif selon la revendication 2, dans lequel l'agent adhésif contient un copolymère séquencé styrène-isoprène-styrène (SIS) comme polymère de base.

4. Elément chauffant adhésif selon l'une quelconque des revendications 1 à 3, dans lequel la teneur en tensioactif est de 10 à 20 parties en poids par rapport à 100 parties en poids de tous les composants de l'agent adhésif autres que le tensioactif.

5. Elément chauffant adhésif selon l'une quelconque des revendications 1 à 4, dans lequel la proportion des composants essentiels de l'agent adhésif autres que le tensioactif est de 40 à 160 parties en poids de l'agent poisseux et de 80 à 230 parties en poids de l'adoucissant, par rapport à 100 parties en poids du polymère de base.

6. Elément chauffant adhésif selon l'une quelconque des revendications 1 à 5, dans lequel l'agent adhésif contient, au moins l'un parmi des éthers d'alkyle et de polyoxyéthylène, des glycols de polyoxyéthylène et de polyoxypropylène, et des huiles de ricin hydrogénées polyoxyéthylénées pour faire office de tensioactif.

7. Elément chauffant adhésif selon l'une des revendications précédentes, dans lequel la couche adhésive est couverte d'une matière de libération.

8. Elément chauffant adhésif selon l'une des revendications précédentes, dans lequel l'organe chauffant contient une composition générant de la chaleur qui génère de la chaleur en présence d'air, la composition générant de la chaleur étant pourvue dans un sac ayant au moins un côté fait en matériau en feuilles perméables.

9. Elément chauffant adhésif selon l'une des revendications précédentes, dans lequel l'élément chauffant est logé dans un sac extérieur fait de matériau en feuilles étanches à l'air.
